(19) Europäisches Patentamt
European Patent Office
Office européen des brevets

(11) EP 4 722 281 A1

(12) # EUROPEAN PATENT APPLICATION
published in accordance with Art. 153(4) EPC

(43) Date of publication:
**08.04.2026 Bulletin 2026/15**

(21) Application number: **24815252.2**

(22) Date of filing: **17.05.2024**

(51) International Patent Classification (IPC):
***C08J 9/16*** *(2006.01)* ***C08J 9/04*** *(2006.01)*

(52) Cooperative Patent Classification (CPC):
**C08J 9/04; C08J 9/16**

(86) International application number:
**PCT/JP2024/018389**

(87) International publication number:
**WO 2024/247768 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.05.2023 JP 2023086812**

(71) Applicant: **JSP Corporation**
**Tokyo 100-0005 (JP)**

(72) Inventors:
- **ITO, Yosuke**
  **Yokkaichi-shi Mie 510-0881 (JP)**
- **CHIBA, Takuya**
  **Yokkaichi-shi Mie 510-0881 (JP)**

(74) Representative: **KBN IP Patentanwälte Partnerschaft mbB**
**Siegfried-Leopold-Straße 27**
**53225 Bonn (DE)**

(54) **POLYOLEFIN-BASED RESIN FOAM PARTICLES AND MOLDED BODY OF POLYOLEFIN-BASED RESIN FOAM PARTICLES**

(57) Provided are: polyolefin-based resin expanded beads exhibiting favorable in-mold moldability and capable of providing a molded article of expanded beads exhibiting excellent flame retardancy; and a molded article of polyolefin-based resin expanded beads having excellent flame retardancy.

The polyolefin-based resin expanded beads have a bulk density of 10 kg/$m^3$ or more and 100 kg/$m^3$ or less, contain a NOR-type hindered amine-based compound represented by a specific structural formula, and are configured so that a content of the NOR-type hindered amine-based compound in the polyolefin-based resin expanded beads is 0.01 mass% or more and 3 mass% or less. The molded article of polyolefin-based resin expanded beads has a density of 10 kg/$m^3$ or more and 100 kg/$m^3$ or less, and is configured so that a content of a NOR-type hindered amine-based compound represented by a specific structural formula in the molded article of polyolefin-based resin expanded beads is 0.01 mass% or more and 3 mass% or less.

EP 4 722 281 A1

## Description

### Technical Field

The present invention relates to polyolefin-based resin expanded beads containing a flame retardant and a molded article of polyolefin-based resin expanded beads having excellent flame retardancy obtained by in-mold molding of the polyolefin-based resin expanded beads.

### Background Art

Molded articles of polyolefin-based resin expanded beads which are obtained by in-mold molding of polyolefin-based resin expanded beads are used for various use applications such as packaging materials, automobile members, and building materials. Such molded articles of expanded beads are colored with carbon black or the like in some cases. In order to make it difficult to burn the molded article of expanded beads, a NOR-type hindered amine-based compound may be added to polypropylene-based resin expanded beads as a flame retardant (for example, Patent Literature 1).

### Citation List

### Patent Literature

Patent Literature 1: JP 2004-263033 A

### Summary of Invention

### Technical Problem

A molded article of expanded beads in which the density of the molded article is reduced and the weight of the molded article is reduced or a molded article of expanded beads containing a large amount of a carbon material such as carbon black tends to be easily burned. Therefore, in order to develop desired flame retardancy, it may be necessary to increase the addition amount of the NOR-type hindered amine-based compound in the expanded beads. However, for example, when the addition amount of the NOR-type hindered amine-based compound described in Patent Literature 1 is increased, there is a possibility that the in-mold moldability of the expanded beads is deteriorated. That is, in order to maintain favorable in-mold moldability of the expanded beads, the addition amount of the NOR-type hindered amine-based compound is preferably small. However, when the addition amount of the NOR-type hindered amine-based compound in the expanded beads was suppressed to a small amount in consideration of the influence on the in-mold moldability and the like, a molded article of expanded beads produced using such expanded beads was difficult to stably exhibit desired flame retardancy.

The present invention has been made in view of such a background. That is, the present invention provides: polyolefin-based resin expanded beads having excellent in-mold moldability and capable of obtaining a molded article of expanded beads stably exhibiting excellent flame retardancy; and a molded article of polyolefin-based resin expanded beads obtained by in-mold molding of the polyolefin-based resin expanded beads.

### Solution to Problem

Polyolefin-based resin expanded beads of the present invention are polyolefin-based resin expanded beads having a bulk density of 10 kg/$m^3$ or more and 100 kg/$m^3$ or less and containing a NOR-type hindered amine-based compound, in which the NOR-type hindered amine-based compound is represented by the following General Formula (I), and a content of the NOR-type hindered amine-based compound in the polyolefin-based resin expanded beads is 0.01 mass% or more and 3 mass% or less:

[Chemical Formula 1]

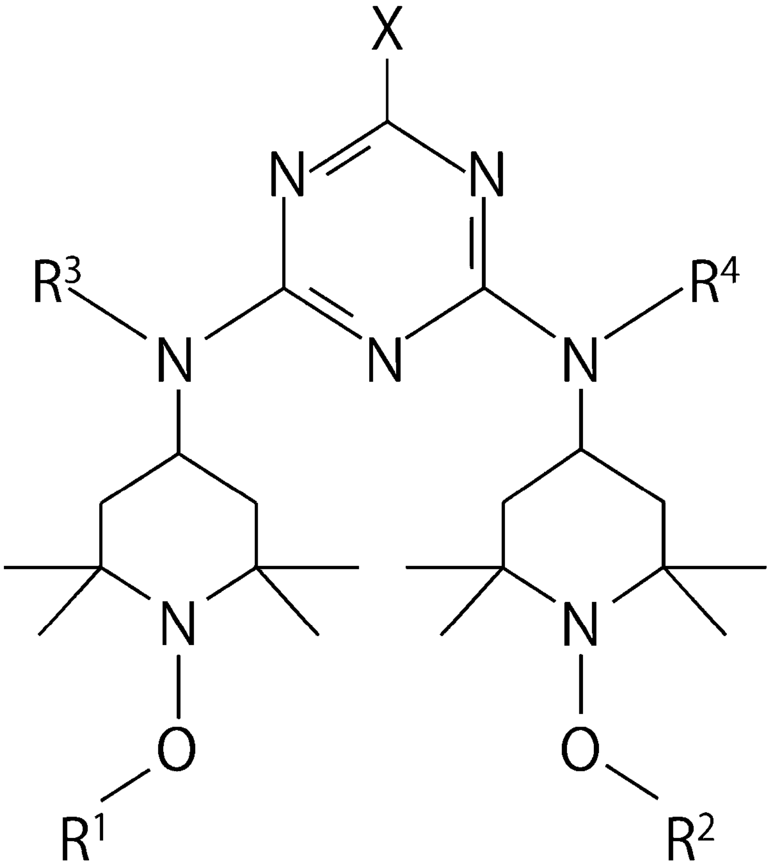

... (I)

In the General Formula (I), $R^1$, $R^2$, $R^3$, and $R^4$ each independently represent a hydrocarbon group, and X represents an alkanolamine group.

A molded article of polyolefin-based resin expanded beads of the present invention is a molded article of polyolefin-based resin expanded beads having a density of 10 kg/$m^3$ or more and 100 kg/$m^3$ or less and containing a NOR-type hindered amine-based compound, in which the NOR-type hindered amine-based compound is represented by the following General Formula (I), and a content of the NOR-type hindered amine-based compound in the molded article of polyolefin-based resin expanded beads is 0.01 mass% or more and 3 mass% or less:

[Chemical Formula 2]

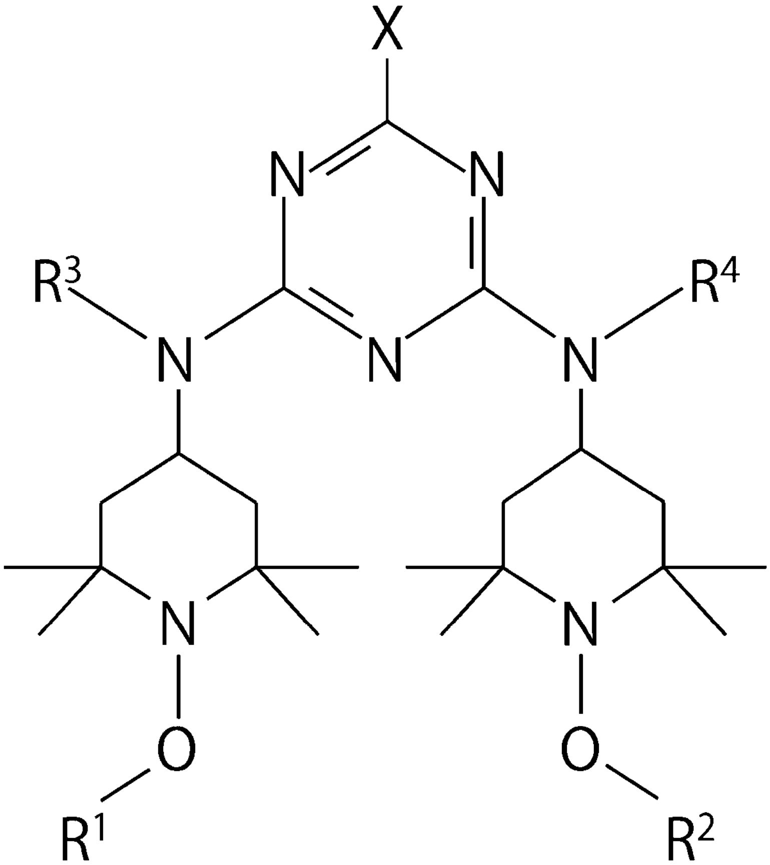

...(I)

In the General Formula (I), $R^1$, $R^2$, $R^3$, and $R^4$ each independently represent a hydrocarbon group, and X represents an alkanolamine group.

Advantageous Effects of Invention

According to the present invention, it is possible to provide: polyolefin-based resin expanded beads having excellent in-mold moldability and capable of obtaining a molded article of expanded beads stably exhibiting excellent flame retardancy; and a molded article of polyolefin-based resin expanded beads obtained by in-mold molding of the polyolefin-based resin expanded beads.

Brief Description of Drawing

Fig. 1 is a DSC curve obtained according to Testing Methods for Heat of Transitions of Plastics described in JIS K 7122:1987 for obtaining a total heat of fusion and a heat of fusion at a high-temperature peak of polyolefin-based resin expanded beads according to an embodiment of the present invention.

Description of Embodiments

Hereinafter, polyolefin-based resin expanded beads of the present invention (hereinafter, the expanded beads may be simply referred to as "the expanded beads of the present invention") and a molded article of polyolefin-based resin expanded beads of the present invention (hereinafter, the molded article may be simply referred to as "the molded article of expanded beads of the present invention") will be described.

In the following description, a preferable numerical range of the present invention may be indicated as appropriate. In this case, a preferred range, a more preferred range, and a particularly preferred range regarding the upper limit and the lower limit of the numerical range can be determined from all combinations of the upper limit and the

lower limit.

The expanded beads of the present invention have a bulk density of 10 kg/$m^3$ or more and 100 kg/$m^3$ or less, and contain a NOR-type hindered amine-based compound represented by the following General Formula (I). Note that, in the following description, the NOR-type hindered amine-based compound represented by the following General Formula (I) may be referred to as a specific hindered amine-based compound. The content of the specific hindered amine-based compound in the expanded beads of the present invention is adjusted to 0.01 mass% or more and 3 mass% or less.

[Chemical Formula 3]

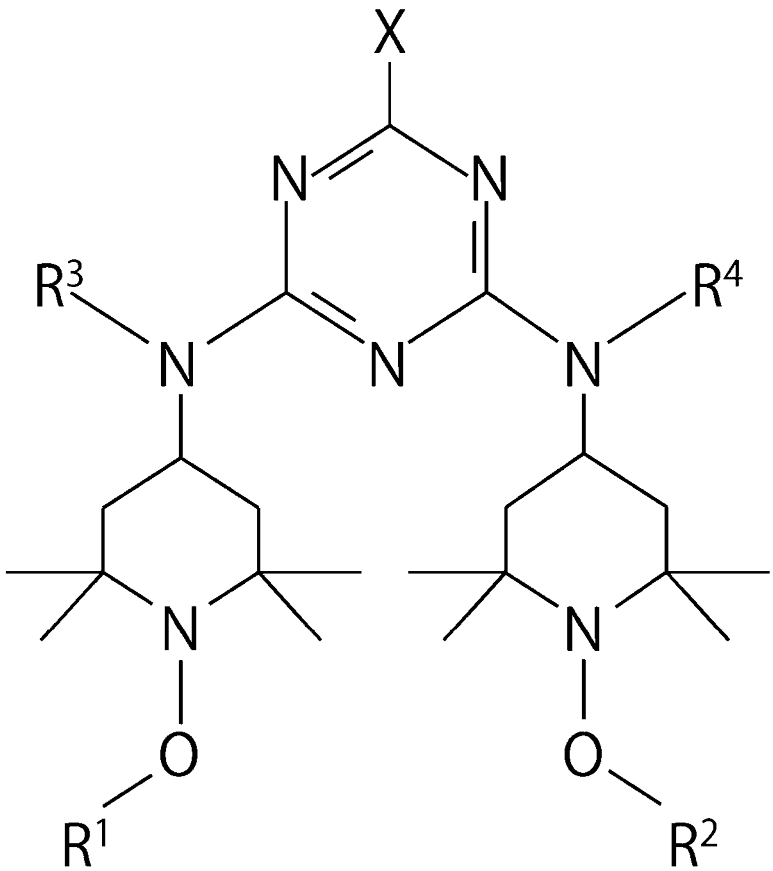

••• (I)

In the General Formula (I), $R^1$, $R^2$, $R^3$, and $R^4$ each independently represent a hydrocarbon group, and X represents an alkanolamine group.

The expanded beads of the present invention having the above-described configuration are excellent in lightness and in-mold moldability, and are also excellent in flame retardancy. Therefore, the expanded beads of the present invention can provide a molded article of expanded beads having a low density, excellent fuse-bond characteristics between the expanded beads, and stably exhibiting excellent flame retardancy. In other words, in the present invention, by using the specific hindered amine-based compound as the flame retardant, even when a relatively large amount of the flame retardant is contained, the in-mold moldability of the expanded beads is hardly deteriorated. Therefore, the present invention can satisfactorily provide polyolefin-based resin expanded beads capable of obtaining a molded article of expanded beads exhibiting desired flame retardancy. In the present invention, even when a relatively small amount of a flame retardant is contained, a molded article of expanded beads exhibiting desired flame retardancy can be obtained. Therefore, the present invention can provide polyolefin-based resin expanded beads in which the deterioration in in-mold moldability of the expanded beads caused by the flame retardant is further suppressed.

Hereinafter, the expanded beads of the present invention will be described in more detail.

[Polyolefin-based resin]

The expanded beads of the present invention contain a polyolefin-based resin as a base material resin. In the present invention, the polyolefin-based resin refers to a homopolymer of an olefin-based monomer such as ethylene, propylene, butene, or pentene and a copolymer containing 50 mol% or more of a component derived from the olefin-based

monomer.

The polyolefin-based resin may be composed of one polyolefin-based resin or may be composed of a mixed resin of two or more polyolefin-based resins.

The polyolefin-based resin preferably contains a polyethylene-based resin and/or a polypropylene-based resin as a main component. More specifically, the total of the ratio of the polypropylene-based resin and the ratio of the polypropylene-based resin in the polyolefin-based resin is preferably 60 mass% or more, and more preferably 80 mass% or more. When the polyolefin-based resin contains a polypropylene-based resin as a main component, the ratio of the polypropylene-based resin in the polyolefin-based resin is preferably 60 mass% or more, and more preferably 80 mass% or more. Examples of the polyethylene-based resin include resins containing 50 mol% or more of ethylene component units, and specific examples thereof include high-density polyethylene, low-density polyethylene, linear low-density polyethylene, ultralow-density polyethylene, an ethylene-vinyl acetate copolymer, an ethylene-methyl methacrylate copolymer, and an ethylene-ethyl acrylate copolymer. Among them, from the viewpoint of stably producing expanded beads excellent in in-mold moldability, the polyethylene-based resin preferably contains linear low-density polyethylene as a main component. More specifically, the ratio of the linear low-density polyethylene in the polyethylene-based resin is preferably 50 mass% or more, more preferably 60 mass% or more, and still more preferably 80 mass% or more.

Examples of the polypropylene-based resin include resins containing 50 mol% or more of propylene component units, and specific examples thereof include a propylene homopolymer, high-impact polypropylene in which a rubber component such as ethylene-propylene rubber is dispersed in polypropylene, which is commercially available as a block polypropylene, a propylene-ethylene random copolymer, a propylene-ethylene block copolymer, a propylene-butene random copolymer, a propylene-butene block copolymer, and a propylene-ethylene-butene random copolymer. Among them, from the viewpoint of stably producing expanded beads excellent in in-mold moldability, the polypropylene-based resin preferably contains a propylene-ethylene random copolymer and/or a propylene-ethylene-butene random copolymer as a main component. More specifically, the ratio of the propylene-ethylene random copolymer and/or the propylene-ethylene-butene random copolymer in the polypropylene-based resin is preferably 50 mass% or more, more preferably 60 mass% or more, and still more preferably 80 mass% or more.

From the viewpoint that a molded article of expanded beads which is excellent in the balance between mechanical physical properties such as compressive strength and lightness and can be particularly suitably used for use applications such as packaging materials, vehicle members, and building materials can be obtained, the expanded beads in the present invention preferably contain a polypropylene-based resin as a base material resin. In this case, the melting point of the polypropylene-based resin constituting the expanded beads is preferably 125°C or higher and 160°C or lower, more preferably 130°C or higher and 155°C or lower, and still more preferably 135°C or higher and 150°C or lower. When the polypropylene-based resin having a melting point in the above range is used as a base material resin, favorable in-mold moldability of the expanded beads and favorable compression properties of the molded article of expanded beads obtained by in-mold molding of the expanded beads can be exhibited in a well-balanced manner.

The melting point of the polypropylene-based resin constituting the expanded beads is measured in accordance with JIS K 7121:2012. Specifically, expanded beads are used as test pieces, and state conditioning is performed based on "(2) When melting temperature is measured after a definite heat treatment" of "3. State conditioning of test piece" in JIS K 7121:2012. In the state conditioning, the test piece is heated from 23°C to 200°C at a heating rate of 10°C/min, the temperature of 200°C is maintained for 10 minutes, and then the test piece is cooled to 23°C at a cooling rate of 10°C/min. After the state conditioning of the test piece is performed in this manner, the test piece is heated again to 200°C at a heating rate of 10°C/min to acquire a DSC curve. The flow rate of the nitrogen gas under the measurement environment is 30 mL per minute. The peak top temperature of the melting peak appearing in the DSC curve obtained as described above is defined as the melting point of the polypropylene-based resin constituting the expanded beads. Note that, when a plurality of melting peaks appear in the DSC curve, the peak top temperature of the melting peak having the highest melting peak height based on the baseline is defined as the melting point of the polypropylene-based resin constituting the expanded beads.

The expanded beads of the present invention may contain, in addition to the polyolefin-based resin, a resin other than the polyolefin-based resin, an elastomer, or the like as long as the object and the operational effect of the present invention are not impaired.

Examples of the resin other than the polyolefin-based resin include thermoplastic resins such as a polystyrene-based resin, a vinyl acetate resin, a thermoplastic polyester resin, an acrylic acid ester resin, a methacrylic acid ester resin, and a polyarylene sulfide-based resin.

Examples of the elastomer include an olefin-based thermoplastic elastomer, a styrene-based thermoplastic elastomer, and an amide-based thermoplastic elastomer. The resin other than the olefin-based resin, and the elastomer are contained in a range of preferably 20 parts by mass or less, and more preferably 10 parts by mass or less with respect to 100 parts by mass of the polyolefin-based resin. It is particularly preferable that the expanded beads of the present invention substantially contain no resin other than the polyolefin-based resin or no elastomer.

[NOR-type hindered amine-based compound]

The expanded beads of the present invention contain a NOR-type hindered amine-based compound represented by the following General Formula (I) in a range of 0.01 mass% or more and 3 mass% or less. From the viewpoint that flame retardancy satisfying a high standard can be exhibited, the expanded beads of the present invention preferably contain a specific hindered amine-based compound in an amount of 0.02 mass% or more, and more preferably 0.03 mass% or more. From the viewpoint that high flame retardancy can be exhibited and sufficiently excellent in-mold moldability is exhibited, the expanded beads of the present invention preferably contain a specific hindered amine-based compound in an amount of 2 mass% or less, and more preferably 1.5 mass% or less. That is, the expanded beads of the present invention preferably contain a specific hindered amine-based compound in a range of 0.02 mass% or more and 2 mass% or less, and more preferably 0.03 mass% or more and 1.5 mass% or less. When the expanded beads contain two or more specific NOR-type hindered amine-based compounds, the total content thereof is defined as the content of the specific NOR-type hindered amine-based compound in the expanded beads.

A hindered amine-based compound in which a nitrogen atom in the 2,2,6,6-tetramethyl-4-piperidine structure is bonded to a carbon hydrogen group via an oxygen atom as in the structure represented by the following General Formula (I) is referred to as a NOR-type hindered amine.

[Chemical Formula 4]

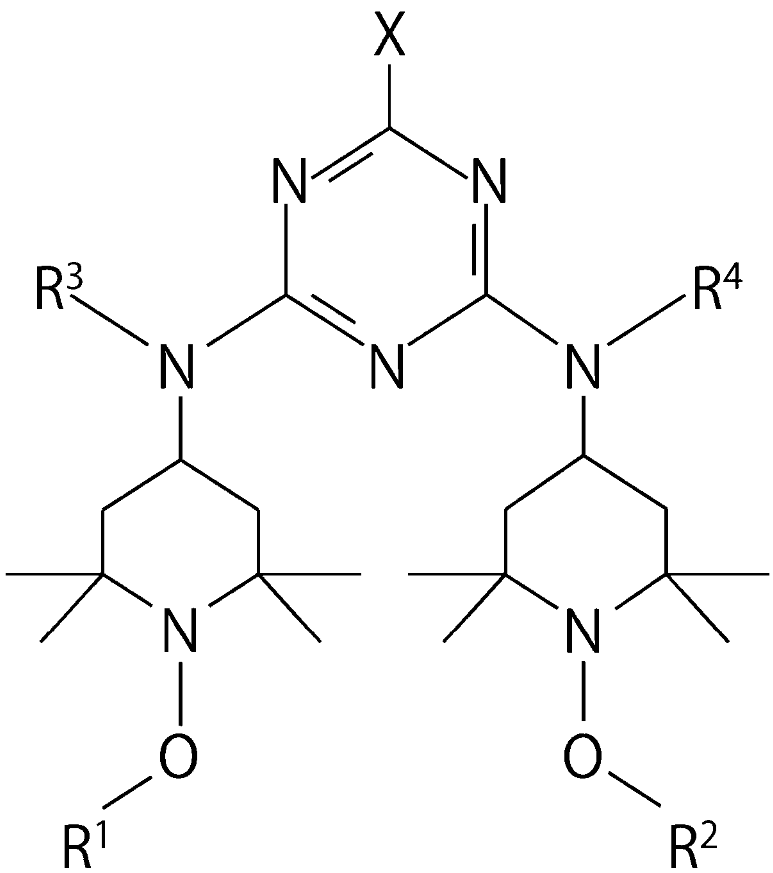

···(I)

In the General Formula (I), $R^1$, $R^2$, $R^3$, and $R^4$ each independently represent a hydrocarbon group, and X represents an alkanolamine group.

The content of the NOR-type hindered amine-based compound in the expanded beads can be determined, for example, by subjecting the expanded beads to proton nuclear magnetic resonance ($^1$H-NMR) or the like. When the content of the NOR-type hindered amine-based compound is determined by proton nuclear magnetic resonance ($^1$H-NMR), for example, the following method can be adopted.

First, the frozen and pulverized expanded beads are subjected to Soxhlet extraction using chloroform as a solvent to remove a polymer component or the like which is a chloroform insoluble part. Next, the chloroform soluble part obtained by the Soxhlet extraction is mixed with acetone to remove the acetone insoluble part. A solid obtained by removing the solvent from the acetone soluble part is used as a measurement sample, and measurement is performed by

proton nuclear magnetic resonance ($^1$H-NMR). The content of the NOR-type hindered amine-based compound in the expanded beads can be determined from the relationship between the above measurement result and the measurement result of the standard product (internal standard sample) having a known concentration. As an apparatus for performing measurement by proton nuclear magnetic resonance ($^1$H-NMR), for example, AL-400 manufactured by JEOL Ltd. can be used. In the measurement, measurement conditions of a solvent: $CDCl_3$ and an internal standard sample: tetrachloroethane (TCE) can be adopted.

The specific hindered amine-based compound used in the present invention is different from other NOR-type hindered amine-based compounds conventionally used as a flame retardant, and X in General Formula (I) is an alkanolamine group. The reason why the flame retardancy of the expanded beads is improved and the in-mold moldability of the expanded beads is well maintained by using a specific hindered amine-based compound as a flame retardant is not clear. However, the reason why the above-described excellent effect of the present invention is exhibited is presumed as follows. That is, it is presumed that X in General Formula (I) is an alkanolamine group, and the -OH group in X acts as a catalyst for forming a synthesis intermediate of the non-flammable gas during burning of the expanded beads (molded article of expanded beads). Therefore, it is presumed that even when the blending amount of a specific hindered amine-based compound is suppressed, high flame retardancy is exhibited, and favorable in-mold moldability is maintained.

From the viewpoint of easily obtaining expanded beads stably exhibiting excellent flame retardancy by bringing the -OH group close to the -NH group in the X to easily generate the above-described catalytic action, the number of carbon atoms of X in General Formula (I) is preferably 1 or more and 8 or less, more preferably 1 or more and 6 or less, and still more preferably 1 or more and 4 or less.

From the viewpoint that expanded beads having favorable in-mold moldability and exhibiting flame retardancy satisfying a high standard can be more stably obtained, the number of carbon atoms in each of the hydrocarbon groups of $R^1$ and $R^2$ in the above General Formula (I) is preferably 1 or more and 20 or less, preferably 2 or more and 16 or less, and more preferably 3 or more and 10 or less. The hydrocarbon groups of $R^1$ and $R^2$ are each preferably an alkyl group or a cycloalkyl group.

From the same viewpoint, the number of carbon atoms of each of the hydrocarbon groups of $R^3$ and $R^4$ in the above General Formula (I) is preferably 1 or more and 20 or less, preferably 2 or more and 10 or less, and more preferably 3 or more and 8 or less. The hydrocarbon groups of $R^3$ and $R^4$ are each preferably an alkyl group or a cycloalkyl group.

It is more preferable to satisfy either one of the following Aspect 1 and Aspect 2, and it is particularly preferable to satisfy both of them.

Aspect 1: $R^1$ and $R^2$ in General Formula (I) are each a cyclohexyl group.

Aspect 2: $R^3$ and $R^4$ in General Formula (I) each represent a butyl group.

Note that X in General Formula (I) is an alkanolamine group which is a substituent having a hydroxy group and an amino group in an alkane skeleton. The specific hindered amine-based compound used in the present invention is preferably an ethanolamine group in which the carbon of the alkane skeleton of X is 2, and more preferably an ethanolamine group in which the carbon of the alkane skeleton of X is 2, and satisfies Aspects 1 and 2.

The melting point of the specific hindered amine-based compound is preferably 60°C or higher and 100°C or lower, more preferably 70°C or higher and 95°C or lower, and still more preferably 75°C or higher and 90°C or lower. When the melting point of the specific hindered amine-based compound is within the above range, the hindered amine-based compound is easily dispersed well in the base material resin, and expanded beads excellent in in-mold moldability can be stably obtained. In the molded article of expanded beads molded using the expanded beads thus obtained, the hindered amine-based compound tends to be less likely to migrate to the surface of the molded article. As a result, a molded article of expanded beads exhibiting excellent flame retardant performance over a long period of time can be stably obtained.

Here, the melting point of the NOR-type hindered amine-based compound can be measured according to "(1) Method by visual observation" in "3. Melting point measurement method" of JIS K 0064:1992.

The structure of the NOR-type hindered amine-based compound contained in the expanded beads may be specified by subjecting the expanded beads to proton nuclear magnetic resonance ($^1$H-NMR) or the like, and the melting point of the NOR-type hindered amine-based compound contained in the expanded beads may be determined by measuring the melting point of the NOR-type hindered amine-based compound having such a structure.

The molecular weight of the specific hindered amine-based compound is preferably 1000 or less, and more preferably 900 or less. When the molecular weight of the specific hindered amine-based compound is within the above range, the hindered amine-based compound is easily dispersed well in the base material resin, and expanded beads excellent in in-mold moldability can be stably obtained. Note that the lower limit of the molecular weight is generally 550 and preferably 600.

Here, the molecular weight of the NOR-type hindered amine-based compound can be determined as the sum of the atomic weights of the atoms constituting the NOR-type hindered amine-based compound. Note that the structure of the NOR-type hindered amine-based compound contained in the expanded beads may be specified by subjecting the expanded beads to proton nuclear magnetic resonance ($^1$H-NMR) or the like, and the molecular weight of the NOR-type hindered amine-based compound may be determined from such a structure.

The expanded beads of the present invention contain one or two or more compounds selected from specific hindered amine-based compounds represented by the above General Formula (I) as a flame retardant. The expanded beads of the present invention may contain, in addition to the specific hindered amine-based compound represented by General Formula (I), a flame retardant other than the specific hindered amine-based compound as long as the object and the operational effect of the present invention are not impaired. Examples of other flame retardants include NOR-type hindered amine-based flame retardants other than the specific hindered amine-based compound, halogen-based flame retardants, phosphorus-based flame retardants, and metal hydroxides.

The amount of the flame retardant other than the specific hindered amine-based compound represented by General Formula (I) is preferably 40 parts by mass or less, more preferably 30 parts by mass or less, still more preferably 20 parts by mass or less, and particularly preferably 10 parts by mass or less with respect to 100 parts by mass of the specific hindered amine-based compound in the expanded beads. It is particularly preferable that the expanded beads of the present invention do not substantially contain a flame retardant other than the specific hindered amine-based compound.

[Carbon material]

The expanded beads of the present invention may further contain a carbon material. Generally, a molded article of expanded beads obtained by in-mold molding of expanded beads containing a carbon material tends to easily burn. However, the expanded beads of the present invention containing a specific hindered amine-based compound may exhibit excellent flame retardancy even in the case of containing a carbon material. The blending amount of the carbon material in the expanded beads of the present invention is not particularly limited, but from the viewpoint of easily exhibiting excellent flame retardancy, the content of the carbon material in the expanded beads is preferably 0.1 mass% or more and 10 mass% or less, more preferably 0.5 mass% or more and 7% mass% or less, and still more preferably 1 mass% or more and 5% mass% or less.

Examples of the carbon material include at least one carbon powder selected from the group consisting of carbon black, carbon nanotube, graphite, graphene, carbon nanofiber, carbon microfiber, carbon microcoil, and carbon nanocoil. Among them, the expanded beads of the present invention containing carbon black in a range of 1 mass% or more and 10 mass% or less, and more preferably 1 mass% or more and 5 mass% or less are preferable because they can provide a black molded article of expanded beads excellent in flame retardancy and also excellent in fuse-bond characteristics, surface appearance, and recoverability. The carbon material contained in the expanded beads of the present invention may be one kind or two or more kinds.

Examples of the carbon black include gas furnace black, oil furnace black, acetylene black, channel black, roller black, thermal black, and ketjen black.

Note that the content of the carbon material in the expanded beads can be determined by, for example, a thermogravimetric differential thermal analyzer (that is, TG-DTA). In this case, first, measurement based on JIS K 7120-1987 is performed on the expanded beads. Then, the content of the carbon material in the expanded beads can be determined based on the mass reduction rate in a predetermined temperature range (for example, from 400°C to 1000°C) of the TG curve obtained by the measurement.

[Other additives]

The expanded beads of the present invention may contain any additive as long as the object and the operational effect are not inhibited. Examples of any additive include one additive or two or more additives selected from the group consisting of a flame retardant auxiliary, a cell controlling agent, a catalyst neutralizing agent, a lubricant, a crystal nucleating agent, an antistatic agent, a conductivity imparting agent, an antioxidant, an ultraviolet absorber, and the like.

[Fusion-bonding layer]

The expanded beads of the present invention may have, on the surface thereof, a fusion-bonding layer for facilitating fusion of the expanded beads even at a lower molding pressure during in-mold molding. The fusion-bonding layer may be present on the entire surface of the expanded beads, or may be present on a part of the surface. As the resin constituting the fusion-bonding layer, a polyolefin-based resin can be preferably used. Examples of the polyolefin-based resin constituting the fusion-bonding layer include a polyolefin-based resin having a melting point lower than the melting point of the polyolefin-based resin constituting the expanded bead body (core layer), and a polyolefin-based resin not having a melting point but having a softening point lower than the melting point of the polyolefin-based resin constituting the expanded bead body (core layer). With regard to the expanded beads having a fusion-bonding layer, the expanded bead body provided with a fusion-bonding layer on the surface may be referred to as a core layer. When the expanded beads include a fusion-bonding layer, the ratio of the fusion-bonding layer in the expanded beads is approximately 0.5 mass% or more and 20 mass% or less, and preferably 1 mass% or more and 10 mass% or less. When the expanded beads include a

fusion-bonding layer having a polyolefin-based resin having a melting point as a base material resin, a difference between the melting point of the polyolefin-based resin constituting the expanded bead body and the melting point of the polyolefin-based resin constituting the fusion-bonding layer is approximately 1°C or more and 30°C or less, preferably 2°C or more and 25°C or less, and more preferably 5°C or more and 20°C or less.

The method for forming the fusion-bonding layer on the surface of the expanded bead body is not particularly limited, and examples thereof include a method in which a resin particle having a fusion-bonding layer on the surface is expanded, and a method in which a fusion-bonding layer is attached to the surface of expanded beads after the expanded beads are obtained. When resin particles having a fusion-bonding layer on the surface are expanded to obtain expanded beads, it is preferable to employ a method of laminating a fusion-bonding layer on the surface of resin particles by co-extruding a molten mixture for forming a core layer and a resin melt for forming a fusion-bonding layer using an extruder capable of co-extrusion when resin particles are produced.

[Bulk density of expanded beads]

The bulk density of the expanded beads of the present invention is 10 kg/$m^3$ or more and 100 kg/$m^3$ or less. Generally, when the bulk density of the expanded beads decreases, the amount of the base material resin constituting the expanded beads decreases, and thus the burning rate of the molded article of expanded beads molded using the expanded beads having a low bulk density tends to increase. However, the expanded beads of the present invention contain a specific hindered amine-based compound as a flame retardant. As a result, in the present invention, the bulk density of the expanded beads is adjusted to the above-described low range, but an increase in the burning rate of the molded article of expanded beads molded using the expanded beads can be suppressed. That is, the expanded beads of the present invention can provide a molded article of expanded beads which is reduced in weight and exhibits excellent flame retardancy.

From the viewpoint of further improving the lightness of the molded article of expanded beads produced by in-mold molding of the expanded beads of the present invention, the bulk density of the expanded beads is preferably 80 kg/$m^3$ or less, more preferably 60 kg/$m^3$ or less, and still more preferably 50 kg/$m^3$ or less.

From the viewpoint of enhancing the mechanical physical properties such as the compressive strength of the molded article of expanded beads produced by in-mold molding of the expanded beads of the present invention, the bulk density of the expanded beads is preferably 12 kg/$m^3$ or more, more preferably 15 kg/$m^3$ or more, and still more preferably 18 kg/$m^3$ or more.

In other words, the bulk density of the expanded beads of the present invention is preferably 12 kg/$m^3$ or more and 80 kg/$m^3$ or less, more preferably 15 kg/$m^3$ or more and 60 kg/$m^3$ or less, and still more preferably 18 kg/$m^3$ or more and 50 kg/$m^3$ or less.

The bulk density of the expanded beads described above is calculated by the following method. First, expanded beads to be used for measurement are left to stand for 24 hours or more in an environment of an air temperature of 23°C, a relative humidity of 50%, and 1 atm. The expanded bead group thus obtained is filled in a measuring cylinder having a volume of 1 L or more, ensuring a bulk volume of 1 L or more. After stabilizing the height of the filled expanded beads, the bulk volume (unit: L) of the expanded bead group is read from the scale of the measuring cylinder. Then, the bulk density (unit: kg/$m^3$) of the expanded beads can be obtained by converting the value obtained by dividing the mass (unit: g) of the expanded bead group in the measuring cylinder by the above-described bulk volume in units.

[Average cell diameter of expanded beads]

The average cell diameter of the expanded beads is preferably 50 $\mu$m or more and 250 $\mu$m or less, more preferably 55 $\mu$m or more and 200 $\mu$m or less, still more preferably 60 $\mu$m or more and 150 $\mu$m or less, and even further preferably 60 $\mu$m or more and 120 $\mu$m or less. When the average cell diameter of the expanded beads is within the above range, expanded beads having favorable in-mold moldability and capable of producing a molded article of expanded beads exhibiting excellent flame retardancy can be stably obtained.

The average cell diameter of the expanded beads can be measured by drawing a plurality of line segments from the outermost surface of the expanded beads to the opposite outermost surface through the central portion in an enlarged photograph of the cross section of the expanded beads divided into two, and dividing the number of cells intersecting each line segment by the total length of the line segments. Specifically, it can be measured by the method described in Examples.

[High-temperature peak of expanded beads]

The expanded beads preferably have a crystal structure in which one or more melting peaks appear on a higher temperature side than the apex of the melting peak intrinsic to the polyolefin-based resin in the DSC curve obtained by heat

flux differential scanning calorimetry. Note that the melting peak intrinsic to the polyolefin-based resin may be referred to as "intrinsic peak". The one or more melting peaks appearing on the higher temperature side than the apex of the intrinsic peak may be referred to as "high-temperature peak". By using the expanded beads exhibiting a high-temperature peak for in-mold molding, the molding conditions for molding a molded article of expanded beads can be selected from a wide range, and the mechanical physical properties such as the compressive strength of a molded article of expanded beads to be obtained can be further enhanced. From such a viewpoint, the heat of fusion at a high-temperature peak is preferably 5 J/g or more, and more preferably 8 J/g or more. The heat of fusion at a high-temperature peak is preferably 50 J/g or less, and more preferably 40 J/g or less. The heat of fusion at a high-temperature peak may be referred to as "heat of high-temperature peak". The heat of high-temperature peak is preferably 5 J/g or more and 50 J/g or less, and more preferably 8 J/g or more and 40 J/g or less.

The heat of high-temperature peak of the expanded beads can be calculated by the following method. First, about 3 mg of expanded beads are used as test pieces, and a DSC curve when the test pieces are heated and melted is acquired according to Testing Methods for Heat of Transitions of Plastics specified in JIS K 7122-1987. The temperature range of the DSC curve is from 23°C to a temperature 30°C higher than the temperature at the end of the melting peak, and the heating rate during heating is 10°C/min. The flow rate of the nitrogen gas under the measurement environment is 30 mL per minute. When the expanded beads have a high-temperature peak, as shown in Fig. 1, an intrinsic peak a and a high-temperature peak b having an apex on a higher temperature side than the apex of the intrinsic peak a appear in the DSC curve. Note that Fig. 1 is an example of a DSC curve of polyolefin-based resin expanded beads measured based on heat-flux differential scanning calorimetry. Although one high-temperature peak b is shown in Fig. 1, the high-temperature peak b may be two or more.

Next, a straight line connecting a point I corresponding to 80°C on the DSC curve and a point II corresponding to the end temperature of melting of the expanded beads is drawn. Note that the end temperature of melting is an end point on the high temperature side of the high-temperature peak b, that is, a point at which the high-temperature peak b returns to the baseline on the high temperature side in the DSC curve.

Next, as shown in Fig. 1, an intersection of a straight line passing through the maximum point III existing between the intrinsic peak a and the high-temperature peak b and parallel to the vertical axis of the graph and a straight line connecting the point I and the point II is defined as IV. An area surrounded by a straight line connecting the point I and the point IV, a straight line connecting the point III and the point IV, and a DSC curve connecting the point I and the point III is defined as an area of the intrinsic peak a. An area of a portion (hatched portion) surrounded by a straight line connecting the point IV and the point II, a straight line connecting the point III and the point IV, and a DSC curve connecting the point III and the point II is defined as an area of the high-temperature peak b. The value of the total heat of fusion of the expanded beads is calculated from the sum of the area of the intrinsic peak a and the area of the high-temperature peak b obtained as described above, and the value of the heat of fusion of the high-temperature peak b is calculated from the area of the high-temperature peak b.

Note that, when a DSC curve is acquired by the above-described method, then the expanded beads are cooled to 23°C at a cooling rate of 10°C/min, and heated again at a heating rate of 10°C/min to acquire a DSC curve, only the intrinsic peak a appears in the DSC curve, and the high-temperature peak b disappears from the DSC curve.

[Molded article of polyolefin-based resin expanded beads]

Next, the molded article of expanded beads of the present invention will be described.

The molded article of expanded beads of the present invention has a density of 10 $kg/m^3$ or more and 100 $kg/m^3$ or less, and contains a NOR-type hindered amine-based compound (specific hindered amine-based compound) represented by the following General Formula (I). The content of the specific hindered amine-based compound in the molded article of expanded beads is 0.01 mass% or more and 3 mass% or less.

[Chemical Formula 5]

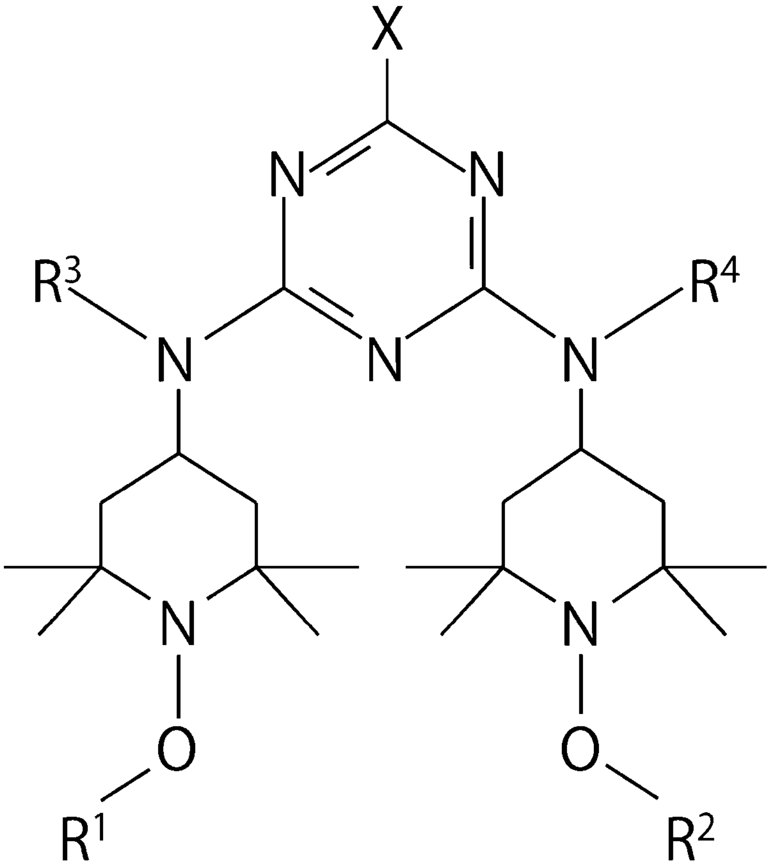

•••(I)

In the General Formula (I), $R^1$, $R^2$, $R^3$, and $R^4$ each independently represent a hydrocarbon group, and X represents an alkanolamine group.

The molded article of expanded beads of the present invention in which the specific hindered amine-based compound is contained in an amount within a predetermined range is excellent in balance between lightness and mechanical physical properties such as compressive strength, and is also excellent in flame retardancy. The molded article of expanded beads of the present invention produced by in-mold molding of the expanded beads of the present invention is also excellent in fuse-bond characteristics, surface appearance, and recoverability. Therefore, the molded article of expanded beads of the present invention can be suitably used for various use applications such as vehicle members and building materials.

Note that the content of the NOR-type hindered amine-based compound in the molded article of expanded beads can be determined, for example, by subjecting the molded article of expanded beads to proton nuclear magnetic resonance ($^1$H-NMR) or the like, as in the method for determining the content of the NOR-type hindered amine-based compound in the expanded beads.

As described above, the density of the molded article of expanded beads of the present invention is 10 $kg/m^3$ or more and 100 $kg/m^3$ or less. From the viewpoint of achieving a balance between lightness and mechanical physical properties such as stiffness and reliably exhibiting flame retardancy, the density is preferably 12 $kg/m^3$ or more and 80 $kg/m^3$ or less, and more preferably 15 $kg/m^3$ or more and 60 $kg/m^3$ or less.

The density of the molded article of expanded beads is calculated by dividing the mass of the molded article of expanded beads by the volume calculated based on the outer dimension.

<Flame retardancy>

The flame retardancy of the molded article of expanded beads can be evaluated based on a burning end position, a burning duration, and a burning distance when the flammability test specified in FMVSS (Federal Motor Vehicle Safety Standard) No. 302 is performed. Specifically, the flammability test method defined in FMVSS No. 302 is as follows.

First, in-mold molding of the expanded beads is performed, and then the obtained molded article of expanded beads is cut to prepare a plate-shaped test piece. Next, the test piece is left to stand for 24 hours in an environment of a temperature of 21°C and a relative humidity of 50% to adjust the state of the test piece. In the test piece after adjusting the state, a start line is drawn at a position 38 mm away from a base end in a length direction, and an end line is drawn at a position 292 mm away from the base end. The test piece is then attached to a U-shaped frame of a FMVSS No. 302 dedicated chamber.

Next, a burner is ignited, and the amount of gas, the amount of air, and the like are adjusted so that the height of the flame is 38 mm. In this state, the burner is moved so that the center of the tip of the burner is located in the center in a width direction at the base end of the test piece, and the flame of the burner is brought into contact with the test piece for 15 seconds. Thereafter, the flame of the burner is taken away from the test piece, and the burning duration from when the burning position of the test piece reaches the start line to when the burning ends is measured.

In the present invention, the flame retardancy of the molded article of expanded beads is evaluated with respect to a self-extinguishing property and an average burning rate.

Specifically, when the test piece is not ignited, when the burning of the test piece ends before reaching the start line, or when the burning end position of the test piece is within 51 mm from the start line and the burning duration is within 60 seconds, it is determined that the molded article of expanded beads has a self-extinguishing property. When the self-extinguishing property described above is not satisfied, the burning rate is obtained by dividing the burning distance from the start line by the burning duration. Note that, when the burning of the test piece reaches the end line, the burning rate is determined by dividing the burning distance from the start line to the end line by the burning duration from the start line to the end line. Ten or more test pieces are prepared, the respective burning rates are obtained, and the arithmetic average thereof is taken as the average burning rate.

As a result of the flammability test specified in FMVSS (Federal Motor Vehicle Safety Standard) No. 302 described above, the burning rate is preferably 102 mm/min or less, more preferably less than 80 mm/min, and still more preferably exhibits a self-extinguishing property. The molded article of expanded beads evaluated to have more favorable flammability or the molded article of expanded beads evaluated to have further favorable flammability is suitably used particularly for use applications requiring high flame retardancy. Among them, a molded article of expanded beads having a self-extinguishing property is suitable for use as a vehicle member such as a bumper or a seat core material of an automobile.

The molded article of expanded beads of the present invention is suitably produced, for example, by in-mold molding of the expanded beads of the present invention. The molded article of expanded beads of the present invention produced by in-mold molding of the expanded beads of the present invention has an excellent effect in the expanded beads of the present invention described above.

For example, the molded article of expanded beads of the present invention may be produced by in-mold molding of the expanded beads of the present invention exhibiting black color. In this case, the molded article of expanded beads exhibits black color and can exhibit favorable flame retardancy. From such a viewpoint, when the molded article of expanded beads contains a carbon material, the content of the carbon material in the molded article of expanded beads is preferably 0.1 mass% or more and 10 mass% or less, more preferably 0.5 mass% or more and 7% mass% or less, and still more preferably 1 mass% or more and 5% mass% or less.

When the molded article of expanded beads contains carbon black, the content of carbon black in the molded article of expanded beads is preferably 1 mass% or more and 10 mass% or less, and more preferably 1 mass% or more and 5 mass% or less.

[Method for producing polyolefin-based resin expanded beads]

The method for producing expanded beads of the present invention is not particularly limited as long as it is a method capable of obtaining expanded beads in which the content of a specific NOR-type hindered amine-based compound contained in the expanded beads is within a specific range. Examples of the production method include a method of foaming resin particles containing a specific NOR-type hindered amine-based compound, and a method of impregnating expanded beads with a specific NOR-type hindered amine-based compound.

Next, a preferred embodiment of the method for producing expanded beads of the present invention will be described.

The expanded beads of the present invention can be obtained by expanding polyolefin-based resin particles containing a blowing agent. For example, expanded beads can be produced by a production method including an expanding step of releasing polyolefin-based resin particles containing a blowing agent from a pressure vessel together with an aqueous medium under a pressure lower than the pressure in the pressure vessel to foam the polyolefin-based resin particles. Note that, in the polyolefin-based resin particles, a polyolefin-based resin is used as a base material resin. The resin particles preferably contain a specific NOR-type hindered amine-based compound.

In the production method, beads in an expanded state obtained in the expanding step may be used as expanded

beads as they are. As described later, expanded beads can also be produced by using the beads in an expanded state obtained in the expanding step as first-step expanded beads and performing a second expanding step using the first-step expanded beads. From the viewpoint of obtaining expanded beads having a lower bulk density, it is preferable to perform the second expanding step after performing the expanding step.

<Particles forming step>

The method for producing expanded beads preferably includes, prior to the expanding step, particles forming step of producing polyolefin-based resin particles containing a specific NOR-type hindered amine-based compound using a polyolefin-based resin as a base material resin. Note that the polyolefin-based resin particles produced in the particles forming step are also simply referred to as resin particles hereinafter. The method for producing the resin particles in the particles forming step is not particularly limited. For example, a polyolefin-based resin, a specific NOR-type hindered amine-based compound, and the like are kneaded and extruded by extrusion molding to prepare a strand, and then the strand is cut into a desired size by a pelletizer or the like, whereby the resin particles can be obtained.

<Expanding step>

In the expanding step, first, the resin particles are supplied into a pressure vessel and dispersed in an aqueous dispersion medium such as water. At this time, a dispersant, a dispersion auxiliary agent, a surfactant, or the like for dispersing the resin particles in the dispersion medium in the pressure vessel may be added as necessary.

As the dispersant, for example, inorganic fine particles such as aluminum oxide, tricalcium phosphate, magnesium pyrophosphate, zinc oxide, kaolin, and mica can be used. These inorganic fine particles may be used alone, or two or more kinds thereof may be used in combination. As the dispersion auxiliary agent, for example, aluminum sulfate or the like can be used. As the surfactant, for example, an anionic surfactant such as sodium alkylbenzene sulfonate, sodium dodecylbenzene sulfonate, or sodium alkanesulfonate can be used. These surfactants may be used alone, or two or more kinds thereof may be used in combination.

After sealing the pressure vessel, a blowing agent is added into the vessel. Thus, the resin particles can be impregnated with the blowing agent. At this time, by heating the inside of the pressure vessel, impregnation of the resin particles with the blowing agent can be promoted. Note that resin particles impregnated with a blowing agent in advance may be supplied into the pressure vessel.

After impregnating the resin particles with a predetermined amount of a blowing agent, the contents of the pressure vessel are released to a pressure lower than the pressure in the pressure vessel, whereby the resin particles are expanded to obtain expanded beads (first-step expanded beads).

Any additive such as carbon black can be blended in the resin particles by, for example, a method of kneading with the base material resin in the particles forming step.

As the blowing agent used in the expanding step, for example, an organic physical blowing agent such as hydrocarbon and halogenated hydrocarbon, or an inorganic physical blowing agent such as carbon dioxide, nitrogen, air, and water can be used. Examples of the hydrocarbon that can be used as the organic physical blowing agent include butane, pentane, and hexane. Examples of the halogenated hydrocarbon that can be used as the organic physical blowing agent include trichlorofluoromethane, dichlorofluoromethane, and tetrachlorodifluoroethane. As the organic physical blowing agent, the above-mentioned substances may be used alone, or two or more kinds thereof may be used in combination. Similarly, as the inorganic physical blowing agent, the above-described substances may be used alone, or two or more kinds thereof may be used in combination.

In the production of the expanded beads of the present invention, the blowing agent is preferably an inorganic physical blowing agent, and more preferably carbon dioxide. By expanding the resin particles using such a blowing agent, it is possible to easily obtain expanded beads that can finally produce a molded article of expanded beads having a high expansion ratio and favorable flame retardancy. Since carbon dioxide is non-flammable, it is possible to avoid deterioration of flame retardancy of the molded article of expanded beads caused by the blowing agent by using carbon dioxide as the blowing agent.

The addition amount of the blowing agent can be appropriately set according to the type of the base material resin, the type of the blowing agent, the bulk density of the intended expanded beads, and the like. For example, when carbon dioxide is used as the blowing agent, the addition amount thereof is preferably 0.1 parts by mass or more and 30 parts by mass or less, more preferably 0.5 parts by mass or more and 15 parts by mass or less, and still more preferably 1 part by mass or more and 10 parts by mass or less with respect to 100 parts by mass of the resin particles.

The expanding step may include a step of generating the above-described high-temperature peak before expanding the resin particles. As a method of generating a high-temperature peak, for example, a method of holding resin particles in a dispersion medium in a pressure vessel within a specific temperature range and performing a heat treatment can be adopted. The timing of performing the heat treatment is not particularly limited, and the heat treatment may be

performed at any of the time points before, during, and after impregnation of the blowing agent, or may be performed over two or more of the time points described above. By this heat treatment, expanded beads having a crystal structure showing a melting peak (intrinsic peak) derived from a crystal intrinsic to the polyolefin-based resin and a melting peak (high-temperature peak) located on a higher temperature side than the intrinsic peak can be obtained. Here, as the heat treatment, for example, a temperature holding step of holding a predetermined temperature for a predetermined time may be performed in the middle of a temperature raising step of raising the temperature in a pressure vessel after charging the resin particles into the pressure vessel.

<Second expanding step>

The production method may further include a second expanding step. The second expanding step is performed, for example, by pressurizing the inside of a pressure-resistant vessel filled with the first-step expanded beads obtained in the expanding step with air or the like, impregnating the first-step expanded beads with air or the like to increase the pressure in the cells, and then heating and expanding the pressure-treated first-step expanded beads. The heating of the expanded beads in the second expanding step may be performed in a pressure-resistant vessel whose pressure is adjusted, or may be performed under a pressure lower than the pressure in the cells taken out from the pressure-resistant vessel. As the first-step expanded beads used in the second expanding step, it is preferable to use first-step expanded beads after curing under atmospheric pressure after the expanding step is completed.

In the production method, by expanding the resin particles in two stages of the expanding step and the second expanding step, low-density expanded beads can be more easily obtained. Although the second expanding step has been described here, the expanded beads obtained in the second expanding step may be used, and the expanding step including a third expanding step or more may be further performed.

In the present specification, the vessel used in the expanding step is referred to as "pressure vessel", and the vessel used in the second expanding step is referred to as "pressure-resistant vessel"; however, any vessel may be used as long as the vessel can be sealed and can apply pressure.

[Method for producing molded article of polyolefin-based resin expanded beads]

The method for producing a molded article of expanded beads of the present invention is not particularly limited as long as a molded article of expanded beads having the above-described configuration can be obtained. For example, a preferred embodiment of the method for producing a molded article of expanded beads of the present invention includes in-mold molding using the expanded beads of the present invention described above.

The in-mold molding widely includes known in-mold molding methods using expanded beads. For example, the in-mold molding of the molded article of expanded beads of the present invention can be performed as follows.

First, the expanded beads of the present invention are filled in a mold having a cavity corresponding to the shape of a desired molded article of expanded beads, and the expanded beads filled in the mold are heated by applying a predetermined molding pressure to the expanded beads with a heating medium such as steam. In this way, the expanded beads in the cavity are further expanded by heating, and the expanded beads are fused to each other. Next, after completion of heating with steam or the like, the pressure is released, and cooling of the mold and the molded article in the mold is quickly started. Thereafter, when it is confirmed that the pressure (surface pressure) generated on the inner surface of the mold has become equal to or less than a predetermined value, the cooling is terminated. Next, the mold is opened, and the molded article of expanded beads is taken out from the mold. The cooling method here is not particularly limited, and examples thereof include water cooling. By such a series of molding steps, a molded article of expanded beads corresponding to the shape of the cavity is obtained.

Examples

Hereinafter, the present invention will be described in detail with reference to Examples, but the present invention is not limited thereto.

In Tables 1 and 2, the NOR-type hindered amine-based compound used and the content (mass%) of the NOR-type hindered amine-based compound in 100 mass% of the expanded beads are shown.

(Example 1)

< particles forming step>

A polypropylene-based resin, carbon black, a NOR-type hindered amine-based compound, and a cell controlling agent were supplied to an extruder, and extruded while being kneaded in the extruder to prepare a strand containing these

components. Thereafter, the obtained strand was cut using a pelletizer to obtain resin particles having a ratio (length/-diameter) of a length of the resin particles to a diameter of the resin particles of 2.0 and an average mass of 1.0 mg.

Note that, as a polypropylene-based resin, a propylene-ethylene random copolymer having a melting point of 143°C and a melt flow rate of 7 g/10 min at 230°C under a load of 2.16 kg was used. As the carbon black, furnace black was used, and added so that the content of carbon black in the expanded beads was 3 mass%. As the NOR-type hindered amine-based compound, a compound (product name; Tinuvin 152, manufactured by BASF, melting point: 83°C, molecular weight: 757) having the structure of the above General Formula (I) and showing the structure of the following Chemical Formula (II) was used. The NOR-type hindered amine-based compound was added so that the content in the expanded beads was a value shown in Table 1. As the cell controlling agent, a zinc borate powder was used and added so that the content in the expanded beads was 0.05 mass%.

[Chemical Formula 6]

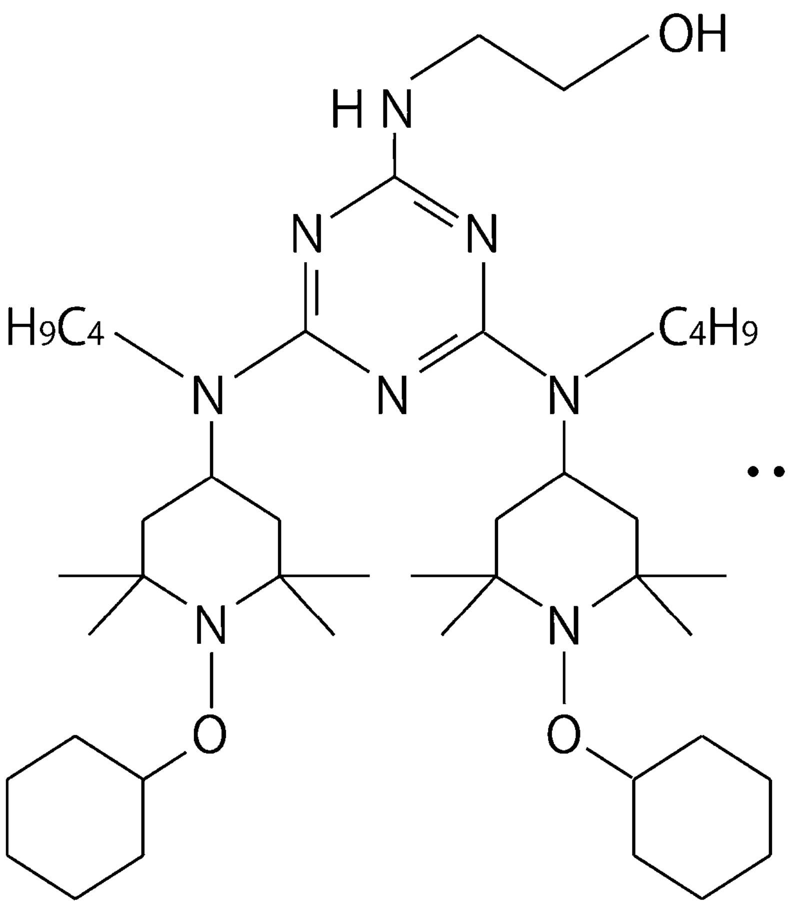

···(II)

<Expanding step>

In an autoclave (pressure vessel) having an internal volume of 5 L, 0.3 parts by mass of a dispersant, 0.01 parts by mass of a dispersion auxiliary agent, 0.004 parts by mass of a surfactant, and 300 parts by mass of a dispersion medium were enclosed with respect to 100 parts by mass of resin particles. Note that the dispersant is kaolin, the dispersion auxiliary agent is aluminum sulfate, the surfactant is sodium dodecylbenzene sulfonate, and the dispersion medium is water.

Next, carbon dioxide was supplied into the autoclave as a blowing agent, and the inside of the autoclave was pressurized until the gauge pressure reached 1.0 MPa (G). Thereafter, the temperature in the autoclave was raised at a heating rate of 2°C/min until the temperature reached 144°C while stirring the inside of the autoclave. After the temperature in the autoclave reached 144°C, this temperature was held for 15 minutes while stirring was continued.

Next, while the inside of the autoclave was stirred, the temperature in the autoclave was raised at a heating rate of 2°C/min until the temperature reached 149°C. After the temperature in the autoclave reached 149°C, the temperature of 149°C was held for 15 minutes while supplying carbon dioxide into the autoclave to adjust the pressure in the autoclave to 2.7 MPa (G). The autoclave was then opened and the contents were released to atmospheric pressure. As described

above, the resin particles were expanded to obtain first-step expanded beads having a bulk density of 45 kg/$m^3$. Note that, in the present specification, the unit of the pressure denoted by (G) means a gauge pressure, that is, a value of the pressure based on the atmospheric pressure.

<Second expanding step>

The first-step expanded beads obtained in the expanding step were cured by being left to stand in an environment of an air temperature of 23°C, a relative humidity of 50%, and 1 atm for 24 hours, and then the cured first-step expanded beads were charged into the pressure-resistant vessel. Next, air was injected into the pressure-resistant vessel, and the pressure in the pressure-resistant vessel was increased from normal pressure to 0.60 MPa (G) over 24 hours. This pressure was maintained for 24 hours to impregnate the cells with air.

Next, the first-step expanded beads taken out from the pressure-resistant vessel were filled in a second expanding machine, and steam at a pressure of 0.15 MPa (G) was supplied to further expand the first-step expanded beads to obtain second-step expanded beads. Table 1 shows the bulk density, the average cell diameter, and the heat of fusion at a high-temperature peak of the obtained second-step expanded beads.

The bulk density of the second-step expanded beads was measured according to the method for measuring the bulk density of the expanded beads described above. Specifically, first, the expanded beads were left to stand for 24 hours or more in an environment of an air temperature of 23°C, a relative humidity of 50%, and 1 atm. The expanded bead group thus obtained was filled in a measuring cylinder with a scale of 1 L, and the floor surface was lightly tapped several times with the bottom surface of the measuring cylinder, so that the height position of the expanded bead group filled in the measuring cylinder was stabilized to a scale of 1 L. The mass (unit: g) of the expanded bead group having a bulk volume of 1 L in the measuring cylinder thus obtained was measured and converted into a unit to calculate the bulk density (unit: kg/$m^3$) of the expanded beads.

The heat of fusion at a high-temperature peak of the second-step expanded beads was measured according to the method for measuring the heat of fusion at the high-temperature peak b described above.

The average cell diameter of the second-step expanded beads was measured as follows. First, 30 expanded beads were randomly selected. The expanded beads were cut so as to pass through the central portion thereof and divided into two, and each enlarged photograph of one cross section was taken. In each cross-sectional photograph, four line segments were drawn from the outermost surface of the expanded beads to the opposite outermost surface through the central portion so that the angle formed by two adjacent line segments was equiangular. The number of cells intersecting respective line segments was measured, and the total length of the four line segments was divided by the total number of cells intersecting the line segments to determine the average cell diameter of respective expanded beads. The average cell diameter of the expanded beads was determined by arithmetically averaging the values of the average cell diameters of the expanded beads.

<In-mold molding>

The second-step expanded beads obtained by the above-described method were filled in a mold capable of molding a flat plate having a length of 350 mm, a width of 250 mm, and a thickness of 50 mm, and heated by the following heating method to prepare a molded article of expanded beads.

First, in a state where drain valves provided on both surfaces of a mold were opened, steam was supplied to the mold to perform preheating (exhaust step). Thereafter, steam was supplied from one side of the mold to perform heating, and steam was further supplied from the other side of the mold to perform heating. Subsequently, steam was supplied from both sides of the mold at a predetermined molding pressure (molding steam pressure) to perform heating (main heating). After completion of the main heating, the pressure was released, and water cooling was performed until the pressure generated on the molding surface of the mold reached 0.04 MPa (G), then the mold was opened, and the molded article of expanded beads was taken out. The obtained molded article was cured in an oven at 80°C for 12 hours to obtain a molded article of expanded beads.

The molding pressure range of the expanded beads was evaluated by the following method.

(Molding pressure range (range of molding steam pressure capable of molding good-quality product)

In the in-mold molding described above, a molded article of expanded beads was molded by changing the molding pressure during the in-mold molding by 0.01 MPa, and the respective items of fuse-bond characteristics, surface appearance, and recoverability of the obtained molded article of expanded beads were evaluated as follows. The molding pressure (molding steam pressure) during in-mold molding in which a molded article of expanded beads in which all three items shown below were acceptable was able to be molded was confirmed, and the width from the lower limit value to the upper limit value of the molding steam pressure was set as the molding pressure range. As a result, the in-mold moldability

of the expanded beads used was confirmed.

Note that, as the range from the lower limit value to the upper limit value of the molding steam pressure capable of molding the molded article of expanded beads that reaches the acceptance criterion is wider, the range of the molding steam pressure capable of molding a good-quality product 000000is wider, which is preferable. As the lower limit value of the molding steam pressure capable of molding a good-quality product is lower, a favorable molded article of expanded beads can be obtained even with a low molding steam pressure, and thus the productivity is excellent.

The range (molding pressure range) from the lower limit value to the upper limit value of the molding steam pressure capable of molding the molded article of expanded beads that reaches the acceptance criterion is preferably 0.02 MPa or more, more preferably 0.03 MPa or more, and still more preferably 0.04 MPa or more.

Fuse-bond characteristics:

The obtained molded article of expanded beads was bent and broken, and the number (C1) of expanded beads present on the fracture surface and the number (C2) of broken expanded beads were determined. The ratio of the number of broken expanded beads to the number of expanded beads ((C2/C1) × 100) was calculated as a material fracture rate. The measurement was performed five times using different test pieces, the respective material fracture rates were determined, and a case where the material fracture rate obtained by arithmetically averaging the material fracture rates was 80% or more was determined as acceptable, and a case where the material fracture rate was less than 80% was determined as unacceptable.

Surface appearance:

A 100 mm × 100 mm square was drawn in the central part of the obtained molded article of expanded beads, a line was drawn diagonally from one corner of the square, and the number of voids (gaps) of 1 mm × 1 mm in size or more on the line was counted. A case where the number of voids was less than 5 was determined to be acceptable, and other cases were determined to be unacceptable.

Recoverability:

The thickness in the vicinity of the four corners and the thickness at the central portion of a flat plate-shaped molded article of expanded beads having a length of 350 mm, a width of 250 mm, and a thickness of 50 mm obtained by in-mold molding were each measured. The vicinity of the four corners refers to a region 10 mm inward from the corner of the molded article of expanded beads in the center direction of the plate surface. The central portion refers to an intersection portion between a line bisecting the molded article of expanded beads in the longitudinal direction and a line bisecting the molded article of expanded beads in the lateral direction. Next, the ratio (%) of the thickness of the central portion to the thickness of the thickest portion in the vicinity of the four corners was calculated. A case where the ratio was 95% or more was determined to be acceptable, and a case where the ratio was less than 95% was determined to be unacceptable.

(Density)

In-mold molding was performed at the lowest molding pressure in the molding pressure range described above to obtain a molded article of expanded beads. This molded article of expanded beads was dried under an environment of 80°C for 24 hours, and then the mass (unit: g) of the molded article of expanded beads was measured. Thereafter, the mass of the molded article of expanded beads was divided by the volume (unit: L) calculated from the outer dimension of the molded article of expanded beads, and then the unit was converted to calculate the density (unit: $kg/m^3$) of the molded article.

(50% compressive strength)

In-mold molding was performed at the lowest molding pressure in the molding pressure range described above to obtain a molded article of expanded beads. This molded article of expanded beads was dried in an environment of 80°C for 24 hours, and then a rectangular parallelepiped test piece having a length of 50 mm, a width of 50 mm, and a thickness of 25 mm was collected from the central portion of the molded article of expanded beads. According to the method specified in JIS K 7220:2006, a compression test of a test piece was performed at a compression rate of 10 mm/min to acquire a stress-strain curve. Note that the compression test was performed in a laboratory at 23°C. The 50% compressive deformation stress of the test piece was calculated based on this stress-strain curve, and this value was taken as the 50% compressive strength of the molded article.

(FMVSS test)

The flame retardancy was evaluated by a method according to the flammability test method defined in FMVSS (Federal Motor Vehicle Safety Standard) No. 302. Specifically, first, the molded article of expanded beads was cut to prepare a test piece having a plate shape with a length of 350 mm, a width of 102 mm, and a thickness of 12.7 mm, in which one of surfaces surrounded by a side with a length of 350 mm and a side with a width of 102 mm was a skin surface. In this test piece, a start line was drawn at a position 38 mm away from the base end in the length direction, and an end line was drawn at a position 292 mm away from the base end. Using this test piece, a flammability test was performed in the same manner as in FMVSS No. 302 with the skin surface in contact with the flame of the burner.

Average burning rate and self-extinguishing rate:

The FMVSS test was performed 10 times, and the average burning rate and the self-extinguishing rate were calculated based on these test results.
The average burning rate was determined by arithmetically averaging the burning rates measured in each test piece. The burning rate of the test piece was calculated by the following Formula (1).
[Mathematical Formula 1]

$$B = 60 \times D/T \cdots\cdots (1)$$

However, the symbol B in the above Formula (1) is the burning rate (unit: mm/min), the symbol D is the distance (unit: mm) by which the flame has progressed, and the symbol T means the time (unit: second) required for the flame to progress by D mm.
Note that, when the test piece was self-extinguished, the burning rate was regarded as 0 mm/min. Here, in a case where "the test piece did not ignite", a case where "the burning of the test piece was completed before reaching the measurement start position (that is, the start line) of the burning time", and a case where "the burning of the test piece was completed within 60 seconds after reaching the measurement start position of the burning time, and the distance from the measurement start position to the burning end position was within 51 mm", it was determined that the test piece was self-extinguished.
The self-extinguishing rate was determined by dividing the number of tests evaluated as "self-extinguishing" by the number of tests (10 times) and expressing the result as a percentage.

(Examples 2 to 4)

First-step expanded beads and second-step expanded beads were produced in the same manner as in Example 1 except that the content of the NOR-type hindered amine-based compound in the expanded beads was changed to the value shown in Table 1. Using the second-step expanded beads, in-mold molding was performed in the same manner as in Example 1 to obtain a molded article of expanded beads. These were each designated as Examples 2 to 4.

(Example 5)

First-step expanded beads and second-step expanded beads were produced in the same manner as in Example 1 except that resin particles produced by the following method were used. Using the second-step expanded beads, in-mold molding was performed in the same manner as in Example 1 to obtain a molded article of expanded beads.
Note that, as the polypropylene-based resin, carbon black, the NOR-type hindered amine-based compound, and the cell controlling agent for forming the core layer used in Example 5, the same materials as those used in Example 1 were used.
First, a producing apparatus including an extruder for forming a core layer, a die for forming a multilayer strand provided downstream of the extruder for forming a core layer, and an extruder for forming a fusion-bonding layer was prepared. Note that the producing apparatus has a configuration in which the downstream side of the extruder for forming a fusion-bonding layer is connected to the die for forming a multilayer strand, the resin melt for forming each layer can be laminated in the die, and co-extrusion can be performed.
As a material for forming a core layer, a polypropylene-based resin, carbon black, a specific NOR-type hindered amine-based compound, and a cell controlling agent were supplied to an extruder for forming a core layer, and melt-kneaded to obtain a polypropylene-based resin melt. At this time, in the core layer of the expanded beads to be obtained, the blending amount of each material was adjusted so that the content of carbon black was 3 mass%, the content of the specific NOR-type hindered amine-based compound was 0.1 mass%, and the content of the cell controlling agent was 0.05 mass%.

As a material for forming a fusion-bonding layer, a polypropylene-based resin, carbon black, and a specific NOR-type hindered amine-based compound were supplied to an extruder for forming a fusion-bonding layer, and melt-kneaded to obtain a polypropylene-based resin melt. At this time, in the fusion-bonding layer of the expanded beads to be obtained, the blending amount of each material was adjusted so that the content of carbon black was 3 mass% and the content of the specific NOR-type hindered amine-based compound was 0.1 mass%.

As a polypropylene-based resin for forming a fusion-bonding layer, a propylene-ethylene-butene random copolymer having a melting point of 133°C and a melt flow rate of 6 g/10 min at 230°C under a load of 2.16 kg was used.

The resin melt for forming each layer formed as described above was introduced into a die for forming a multilayer strand and joined in the die, and a multilayer strand having a two-layer structure was extruded from pores of an end tube attached to the downstream side of the die. The two-layer structure refers to a structure of a fusion-bonding layer/core layer. The extruded strand was cooled with water and cut with a pelletizer to obtain polypropylene-based resin particles having a length/diameter of 2.0 and an average mass of 1.0 mg. The mass ratio between the core layer and the fusion-bonding layer was core layer/fusion-bonding layer = 95/5.

(Example 6)

First-step expanded beads and second-step expanded beads were produced in the same manner as in Example 1 except that carbon black was not used. Using the second-step expanded beads, in-mold molding was performed in the same manner as in Example 1 to obtain a molded article of expanded beads. This was designated as Example 6.

(Example 7)

Using the first-step expanded beads prepared in the production process of Example 1, in-mold molding was performed in the same manner as in Example 1 to obtain a molded article of expanded beads. This was designated as Example 7.

(Comparative Examples 1 to 4)

First-step expanded beads and second-step expanded beads were produced in the same manner as in Example 1 except that the types of the NOR-type hindered amine-based compound to be used were changed to those shown in Table 2. Using the second-step expanded beads, in-mold molding was performed in the same manner as in Example 1 to obtain a molded article of expanded beads. These were designated as Comparative Examples 1 to 4.

Note that, in Comparative Examples 1 to 4, a NOR-type hindered amine-based compound having no structure of the above General Formula (I) was used. Specifically, the NOR-type hindered amine-based compound used in Comparative Examples 1 and 2 is "product name; NOR116FF, manufactured by BASF, melting point: 108°C, molecular weight: 2261", the NOR-type hindered amine-based compound used in Comparative Example 3 is "product name; EVERSORB 95, manufactured by Everlight Chemical, liquid at normal temperature, molecular weight: 737", and the NOR-type hindered amine-based compound used in Comparative Example 4 is a polymer-type hindered amine-based compound, which is "product name; NOR371FF, manufactured by BASF, melting point: 91°C, molecular weight: 2800 to 4000".

For Examples 2 to 7 and Comparative Examples 1 to 4, measurement of the heat of fusion at a high-temperature peak, the bulk density, and the average cell diameter of the expanded beads, measurement of the density, the molding pressure range, and the 50% compressive strength of the molded article of expanded beads, and the FMVSS test were performed in the same manner as in Example 1. Note that, in Example 7, since the second expanding step was not performed, the first-step expanded beads were used for each measurement described above.

[Table 1]

| | | | | Example 1 | Example 2 | Example 3 | Example 4 | Example 5 |
|---|---|---|---|---|---|---|---|---|
| Expanded beads | NOR-type hindered amine-based compound | Type | - | Tinuvin 152 | Tinuvin 152 | Tinuvin 152 | Tinuvin 152 | Tinuvin 152 |
| | | Content | mass% | 0, 04 | 0, 1 | 0,5 | 1 | 0,1 |
| | Bulk density | | $kg/m^3$ | 30 | 30 | 30 | 30 | 30 |
| | Average cell diameter | | μm | 90 | 90 | 90 | 90 | 90 |
| | Heat of fusion at high-temperature peak | | J/g | 15 | 15 | 15 | 15 | 15 |
| Molded article of expanded beads | Molding pressure range | | MPa (G) | 0.22-0.26 | 0.22-0.26 | 0.22-0.26 | 0.22-0.26 | 0.22-0.26 |
| | Density | | $kg/m^3$ | 33 | 31 | 31 | 33 | 33 |
| | 50% compressive strength | | kPa | 300 | 300 | 300 | 300 | 300 |
| | FMVSS test | Average burning rate | mm/min | 0 | 0 | 0 | 0 | 0 |
| | | Self-extinguishing rate | % | 100 | 100 | 100 | 100 | 100 |

[Table 2]

| | | | | Example 6 | Example 7 | Comparative Example 1 | Comparative Example 2 | Comparative Example 3 | Comparative Example 4 |
|---|---|---|---|---|---|---|---|---|---|
| Expanded beads | NOR-type hindered amine-based compound | Type | - | Tinuvin 152 | Tinuvin 152 | NOR116 FF | NOR116 FF | EVER SORB95 | NOR371 FF |
| | | Content | mass% | 0,04 | 0,04 | 0,04 | 1 | 0,04 | 0,04 |
| | Bulk density | | $kg/m^3$ | 33 | 42 | 31 | 32 | 31 | 30 |
| | Average cell diameter | | μm | 90 | 75 | 80 | 80 | 80 | 90 |
| | Heat of fusion at high-temperature peak | | J/g | 15 | 15 | 15 | 15 | 15 | 15 |
| Molded article of expanded beads | Molding pressure range | | MPa (G) | 0.22-0.26 | 0.22-0.26 | 0.22-0.26 | 0.26 | 0.22-0.26 | 0.22-0.26 |
| | Density | | $kg/m^3$ | 35 | 45 | 35 | 35 | 34 | 34 |
| | 50% compressive strength | | kPa | 300 | 400 | 300 | 300 | 300 | 300 |
| | FMVSS test | Average burning rate | mm/min | 0 | 0 | 40 | 0 | 80 | 80 |
| | | Self-extinguishing rate | % | 100 | 100 | 50 | 100 | 0 | 0 |

The present invention described above includes the following technical ideas.

(1) Polyolefin-based resin expanded beads having a bulk density of 10 $kg/m^3$ or more and 100 $kg/m^3$ or less and containing a NOR-type hindered amine-based compound, wherein

the NOR-type hindered amine-based compound is represented by the following General Formula (I), and
a content of the NOR-type hindered amine-based compound in the polyolefin-based resin expanded beads is 0.01 mass% or more and 3 mass% or less:

[Chemical Formula 7]

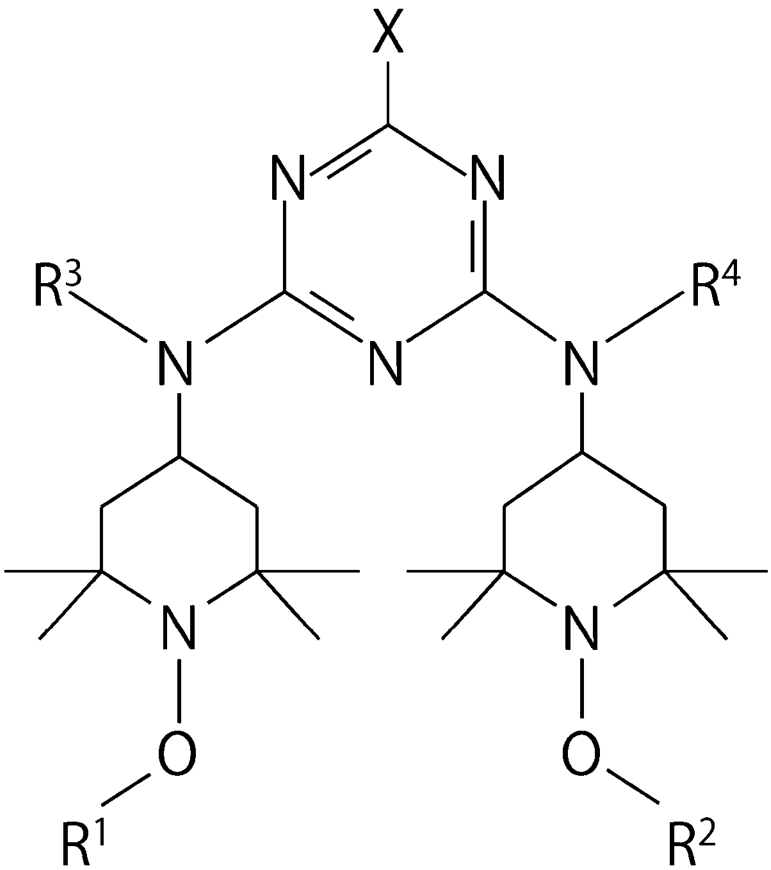

•••(I)

In the General Formula (I), $R^1$, $R^2$, $R^3$, and $R^4$ each independently represent a hydrocarbon group, and X represents an alkanolamine group.

(2) The polyolefin-based resin expanded beads according to (1), in which a melting point of the NOR-type hindered amine-based compound is 60°C or higher and 100°C or lower.
(3) The polyolefin-based resin expanded beads according to (1) or (2), in which a molecular weight of the NOR-type hindered amine-based compound is 1000 or less.
(4) The polyolefin-based resin expanded beads according to any one of (1) to (3), in which X in the above General Formula (I) is an ethanolamine group.
(5) The polyolefin-based resin expanded beads according to any one of (1) to (4), in which the polyolefin-based resin expanded beads further contain a carbon material.
(6) A molded article of polyolefin-based resin expanded beads having a density of 10 $kg/m^3$ or more and 100 $kg/m^3$ or less and containing a NOR-type hindered amine-based compound, in which

the NOR-type hindered amine-based compound is represented by the following General Formula (I), and
a content of the NOR-type hindered amine-based compound in the molded article of polyolefin-based resin expanded beads is 0.01 mass% or more and 3 mass% or less:

[Chemical Formula 8]

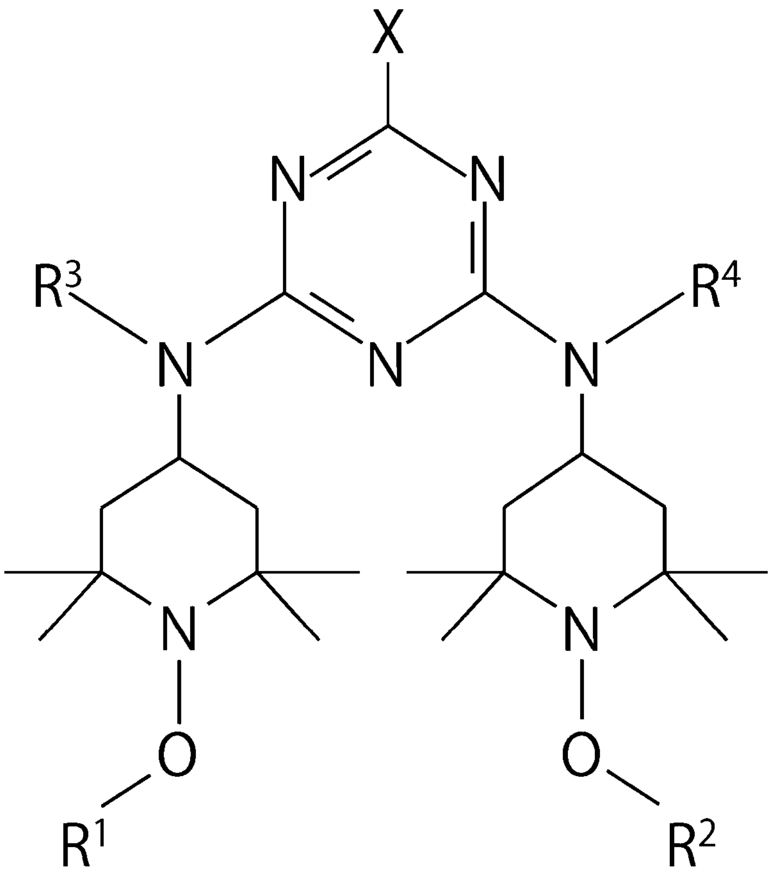

•••(I)

In the General Formula (I), $R^1$, $R^2$, $R^3$, and $R^4$ each independently represent a hydrocarbon group, and X represents an alkanolamine group.

**Claims**

**1.** Polyolefin-based resin expanded beads having a bulk density of 10 $kg/m^3$ or more and 100 $kg/m^3$ or less and containing a NOR-type hindered amine-based compound, wherein

the NOR-type hindered amine-based compound is represented by the following General Formula (I), and
a content of the NOR-type hindered amine-based compound in the polyolefin-based resin expanded beads is 0.01 mass% or more and 3 mass% or less:

[Chemical Formula 1]

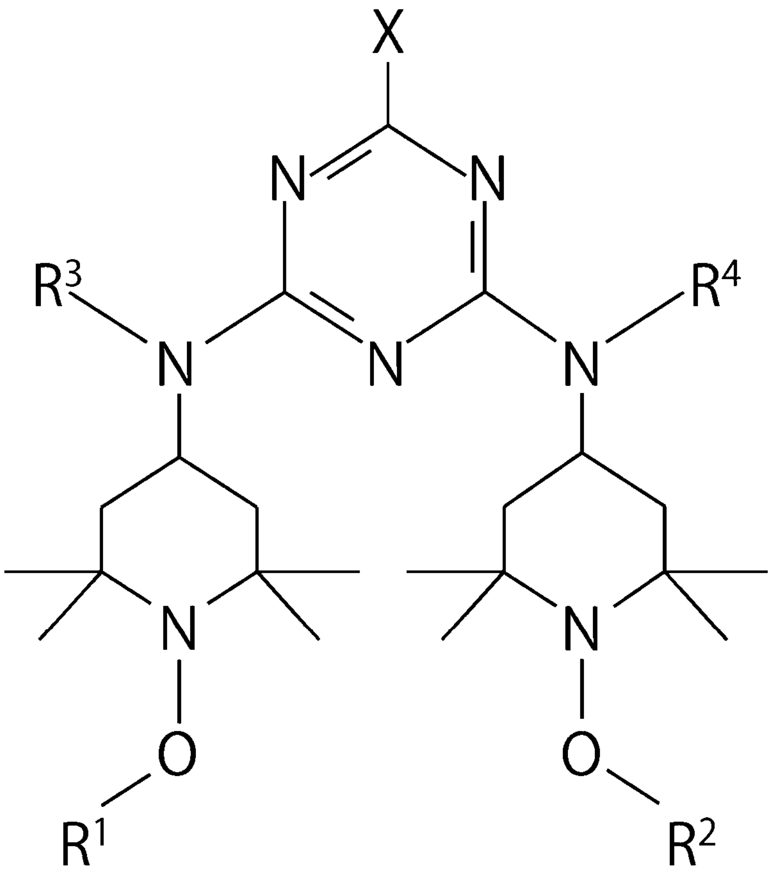

••• (I)

In the General Formula (I), $R^1$, $R^2$, $R^3$, and $R^4$ each independently represent a hydrocarbon group, and X represents an alkanolamine group.

2. The polyolefin-based resin expanded beads according to claim 1, wherein a melting point of the NOR-type hindered amine-based compound is 60°C or higher and 100°C or lower.

3. The polyolefin-based resin expanded beads according to claim 1 or 2, wherein a molecular weight of the NOR-type hindered amine-based compound is 1000 or less.

4. The polyolefin-based resin expanded beads according to any one of claims 1 to 3, wherein X in the above General Formula (I) is an ethanolamine group.

5. The polyolefin-based resin expanded beads according to any one of claims 1 to 4, wherein the polyolefin-based resin expanded beads further contain a carbon material.

6. A molded article of polyolefin-based resin expanded beads having a density of 10 $kg/m^3$ or more and 100 $kg/m^3$ or less and containing a NOR-type hindered amine-based compound, wherein

the NOR-type hindered amine-based compound is represented by the following General Formula (I), and
a content of the NOR-type hindered amine-based compound in the molded article of polyolefin-based resin expanded beads is 0.01 mass% or more and 3 mass% or less:

[Chemical Formula 2]

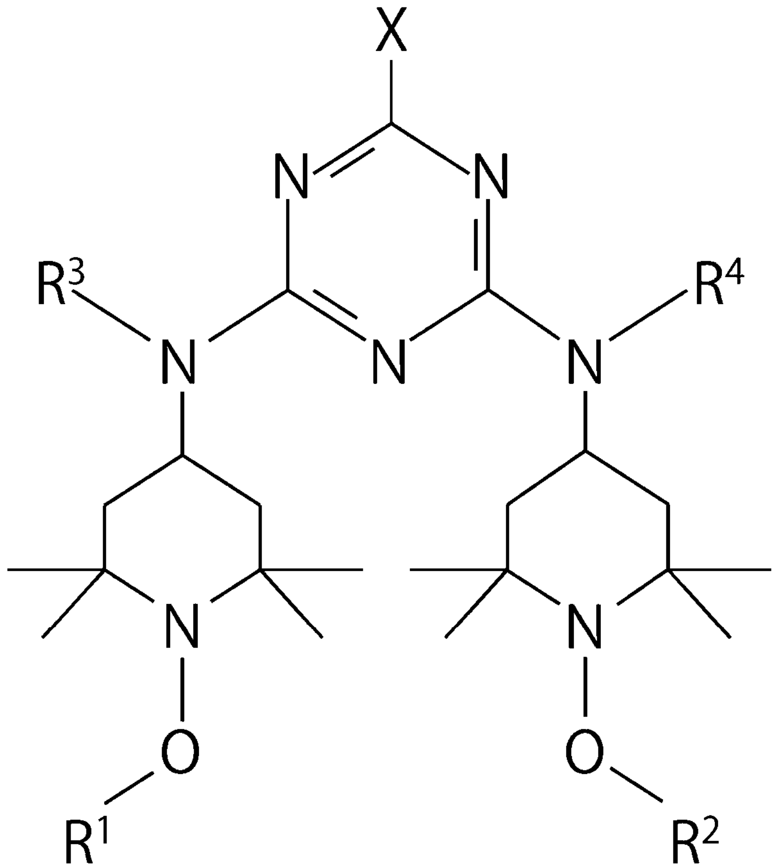

・・・(I)

In the General Formula (I), $R^1$, $R^2$, $R^3$, and $R^4$ each independently represent a hydrocarbon group, and X represents an alkanolamine group.

FIG. 1

[Fig.1]

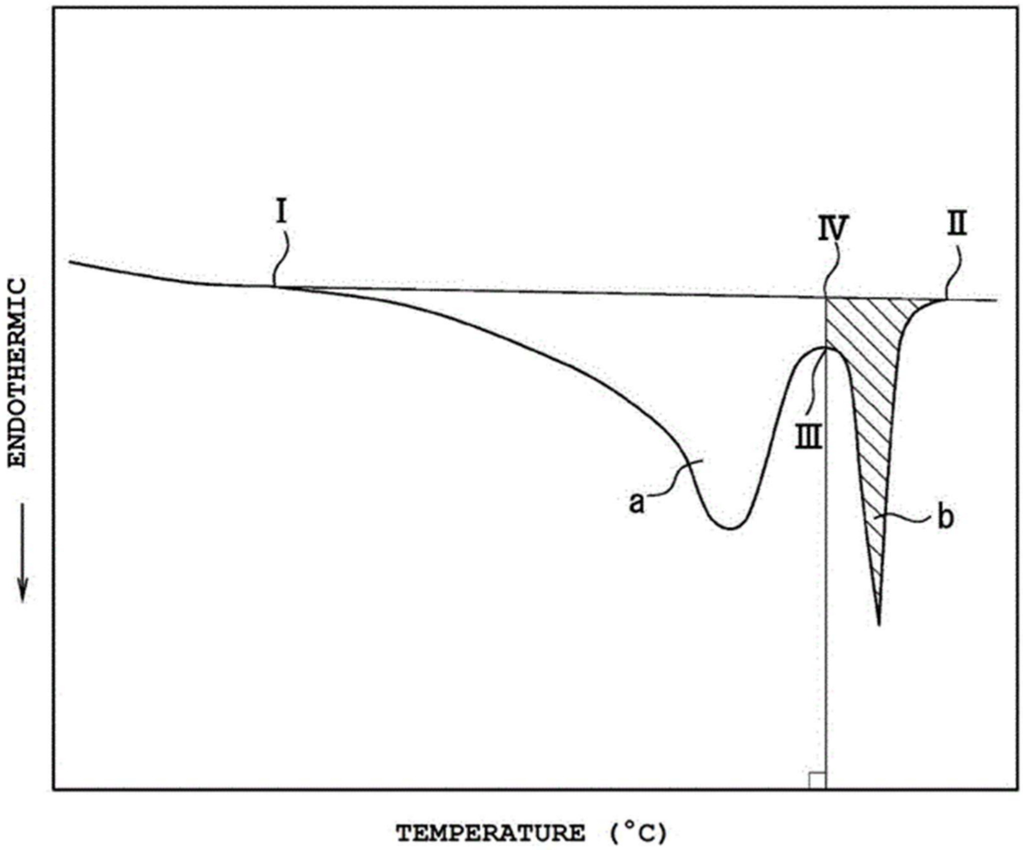

**INTERNATIONAL SEARCH REPORT**

International application No. **PCT/JP2024/018389**

**A. CLASSIFICATION OF SUBJECT MATTER**

***C08J 9/16***(2006.01)i; ***C08J 9/04***(2006.01)i
FI: C08J9/16 CES; C08J9/04 103

According to International Patent Classification (IPC) or to both national classification and IPC

**B. FIELDS SEARCHED**

Minimum documentation searched (classification system followed by classification symbols)

B29C44/00; C08J9/00-9/42; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2023-25507 A (JSP CORP.) 22 February 2023 (2023-02-22) entire text | 1-6 |
| A | JP 2022-135455 A (KANEKA CORP.) 15 September 2022 (2022-09-15) entire text | 1-6 |
| A | JP 2004-263033 A (JSP CORP.) 24 September 2004 (2004-09-24) entire text | 1-6 |
| A | JP 2019-30998 A (TOPPAN PRINTING CO., LTD.) 28 February 2019 (2019-02-28) entire text | 1-6 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/018389**

| Patent document cited in search report | Publication date (day/month/year) | Patent family member(s) | Publication date (day/month/year) |
|---|---|---|---|
| JP 2023-25507 A | 22 February 2023 | (Family: none) | |
| JP 2022-135455 A | 15 September 2022 | (Family: none) | |
| JP 2004-263033 A | 24 September 2004 | US 2004/0171708 A1<br>entire text<br>EP 1452559 A1<br>CN 1530393 A | |
| JP 2019-30998 A | 28 February 2019 | US 2020/0048445 A1<br>entire text<br>EP 3632978 A1<br>CN 110691814 A<br>KR 10-2020-0015460 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004263033 A